# EUROPEAN PATENT APPLICATION

(11) **EP 4 443 712 A1**
(43) Date of publication of application: **09.10.2024**
(21) Application number: 23187578.2
(22) Date of filing: 25.07.2023
(51) Int. Cl.: H02K 3/50, H02K 3/52

(54) **STATOR AND TERMINAL FIXING STRUCTURE THEREOF**

(30) Priority: 31.03.2023 CN 202310335530
(71) Applicant: Delta Electronics, Inc., Taoyuan City 333 (TW)
(72) Inventor: Sheu, Hong-Cheng, 333 Taoyuan City (TW); Lin, Hsing-Cheng, 333 Taoyuan City (TW); Lo, Hung-Chi, 333 Taoyuan City (TW); Wen, Ching-Yen, 333 Taoyuan City (TW)
(74) Representative: Nederlandsch Octrooibureau

(57) **Abstract**

A terminal fixing structure applied in a stator includes a wire terminal, a bus bar terminal, a metal ring and a solder joint structure. The wire terminal includes a first end, and the first end is a quadrilateral cylinder. The bus bar terminal includes a second end, and the second end is a quadrangular cylinder, wherein a sidewall of the first end and a sidewall of the second end are immediately-adjacent to each other. The metal ring is arranged around the first end and the second end. The solder joint structure connects an end surface of the first end and an end surface of the second end.

## Description

### BACKGROUND

### Field of Disclosure

The present disclosure relates to a terminal fixing structure, and particularly to a terminal fixing structure of a motor stator.

### Description of Related Art

In the application of vehicle traction motors, regardless of low voltage or high power requirements, the wires wound in the stator accommodating slot must have sufficient cross-sectional area to withstand the maximum currents. Therefore, wire terminals and bus bar terminals should have such design to meet the current density requirements of the wire.

At present, an electrical connection between a wire terminal and a bus bar terminal is achieved by welding. When a vehicle is running, the welding joint surface between the wire terminal and the bus bar terminal will be subjected to a large mechanical stress due to the vibration generated during the running of the vehicle. Under excessive mechanical stress, the welding joint surface may be broken. In order to avoid the fracture of the welding joint surface, the quality of the solder joints must be ensured, and the specifications of the solder joints will be strictly defined.

Since the quality of solder joints is not easy to be strictly controlled in real time on the production line, it is easy to cause large deviations in the quality of solder joints. Overcoming such problem by improving the quality of solder joints usually accompanied by huge production costs and sacrifice of welding quality. Once the solder joints are unable to counteract the mechanical stress, the solder joints will be cracked, resulting in the malfunction of the stator and the inability to provide running power for the vehicle.

### SUMMARY

The present disclosure provides a motor stator and its terminal fixing structure to deal with the needs of the prior art problems.

In one or more embodiments, a terminal fixing structure applied in a stator includes a wire terminal, a bus bar terminal, a metal ring and a solder joint structure. The wire terminal includes a first end, and the first end is a quadrilateral cylinder. The bus bar terminal includes a second end, and the second end is a quadrangular cylinder, wherein a sidewall of the first end and a sidewall of the second end are immediately-adjacent to each other. The metal ring is arranged around the first end and the second end. The solder joint structure connects an end surface of the first end and an end surface of the second end.

In one or more embodiments, a stator includes a stator core, a plurality of wire terminals, a plurality of bus bar terminals, a plurality of metal rings and a plurality of solder joint structures. The stator core includes multiple slot-positions. Each wire terminal includes a wire terminal end, and the wire terminal end is partially located in a corresponding one of the multiple slot-positions, the wire terminal end includes a first end and the first end is a quadrilateral cylinder. The bus bar terminals are located in the stator core, each bus bar terminal includes a bus bar terminal end, the bus bar terminal end comprising a second end and the second end being a quadrilateral cylinder, wherein a sidewall of the first end and a sidewall of the second end are immediately-adjacent to each other. Each metal ring is arranged around a corresponding first end and a corresponding second end. Each solder joint structure connects an end surface of the corresponding first end and an end surface of the corresponding second end.

In one or more embodiments, the wire terminals include an electrical phase terminal or an electrical neutral terminal.

In one or more embodiments, the solder joint structure is in physical contact with the metal ring.

In one or more embodiments, the metal ring has a length in an extension direction of the first end and the second end, and the length is greater than 2 millimeters.

In one or more embodiments, a distance between the sidewall of the first end and the sidewall of the second end that are immediately-adjacent to each other is smaller than 0.5 millimeter.

In one or more embodiments, the metal ring conformally contacts remaining sidewalls except the immediately-adjacent sidewalls of the first end and the second end.

In one or more embodiments, the metal ring is a polygon with rounded corners.

In one or more embodiments, a sidewall of the bus bar terminal has at least one stepped structure to restrict the metal ring.

In one or more embodiments, a cross-sectional area of the bus bar terminal is larger than a cross-sectional area of the wire terminal where the sidewall of the first end and the sidewall of the second end that are immediately-adjacent to each other.

In sum, the stator structure and its terminal fixing structure disclosed herein are surrounded by metal rings on two immediate-adjacent sidewalls to the terminal ends to share the mechanical stress caused by vibration, so that the quality of the solder joint structure can be properly adjusted down, thereby reducing manufacturing difficulty and improving production yield.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of a stator structure according to one embodiment of the present disclosure;
Fig. 2 illustrates a perspective view of a stator structure with a portion of its bus bar removed according to one embodiment of the present disclosure;
Fig. 3 illustrates an enlarged view of a bus bar in a stator structure of Fig. 2 according to one embodiment of the present disclosure;
Fig. 4 illustrates a fixing structure of a wire terminal and a bus bar terminal in a stator structure according to one embodiment of the present disclosure;
Fig. 5 illustrates the fixing structure in Fig. 4 with its metal ring removed;
Fig. 6 illustrates a top view of the fixing structure in Fig. 4;
Fig. 7 illustrates a top view of the fixing structure in Fig. 5; and
Fig. 8 illustrates a fixing structure according to one embodiment of the present disclosure; and
Fig. 9 illustrates a fixing structure according to another embodiment of the present disclosure.

### DETAILED DESCRIPTION

Reference will now be made in detail to the present embodiments of the disclosure, examples of which are illustrated in the accompanying drawings. Wherever possible, the same reference numbers are used through the drawings and the description to refer to the same or like parts.

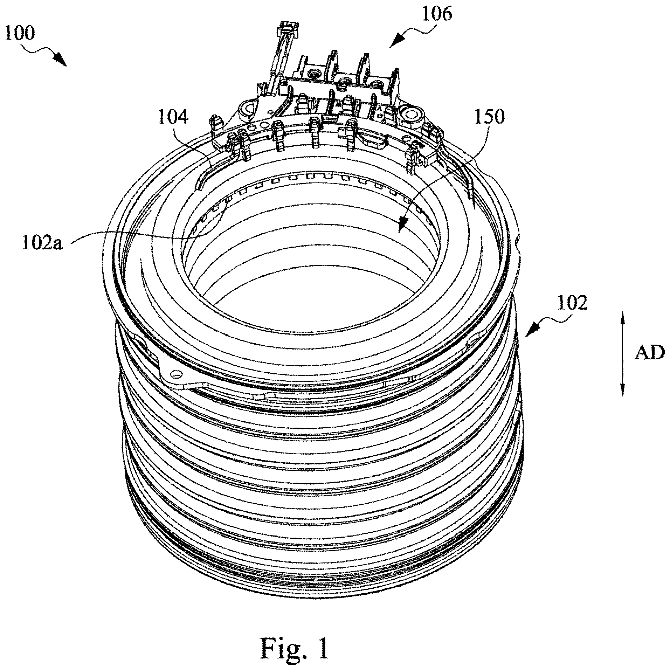

Reference is made to Fig. 1, which illustrates a perspective view of a stator structure 100 according to one embodiment of the present disclosure. The stator structure 100 includes a stator core 102, a plurality of wire terminals 104 and a bus bar 106. The stator core 102 is formed by stacking multiple silicon steel sheets such that it is also called silicon steel sheet laminated structure. The stator core 102 has a rotor accommodation space 150 for accommodating a rotor (not shown). The stator core 102 has a plurality of slot-positions 102a extending in an axial direction AD and arranged around the rotor accommodation space 150 so that a plurality of wire terminals 104 can be installed therein to form the winding of the stator. The bus bar 106 is used to connect the wire terminals 104 in series and connected to an external power supply.

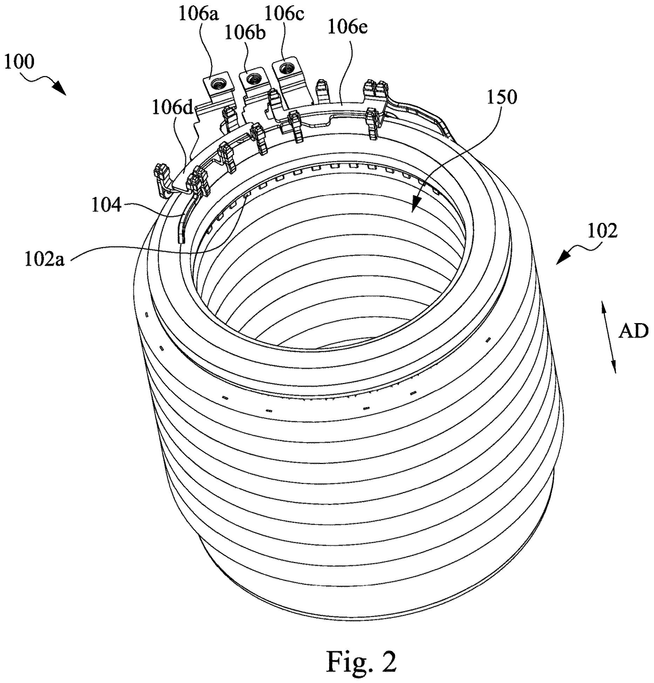

Reference is made to Fig. 2, which illustrates a perspective view of a stator structure according to one embodiment of the present disclosure. The stator structure has a portion of its bus bar removed to expose a bus bar terminal 106a, a bus bar terminal 106b, a bus bar terminal 106c, a bus bar terminal 106d and a bus bar terminal 106e. In some embodiments, the bus bar terminal 106a, the bus bar terminal 106b, the bus bar terminal 106c, the bus bar terminal 106d and the bus bar terminal 106e are all terminals made of conductive materials. In some embodiments, the bus bar terminal 106a, the bus bar terminal 106b, the bus bar terminal 106c, the bus bar terminal 106d and the bus bar terminal 106e are terminals made of iron, aluminum, copper, tin, steel or alloys thereof.

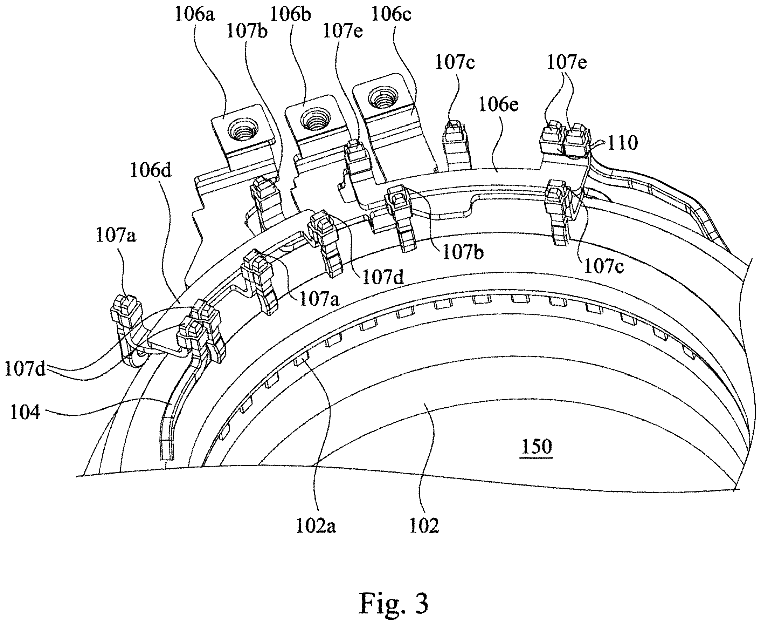

Fig. 3 illustrates an enlarged view of a bus bar in a stator structure of Fig. 2 according to one embodiment of the present disclosure. The bus bar terminal 106a includes two terminal ends 107a, one of which is located at the radially inner edge of the stator core 102 (closer to the rotor accommodation space 150), and the other is located at the radially outer edge of the stator core 102 (farther away from the rotor accommodation space 150), so as to be paired with the corresponding wire terminals 104 and fixed by a metal ring 110. The bus bar terminal 106b includes two terminal ends 107b, one of which is located at the radially inner edge of the stator core 102 (closer to the rotor accommodation space 150), and the other is located at the radially outer edge of the stator core 102 (farther away from the rotor accommodation space 150), so as to be paired with the corresponding wire terminals 104 and fixed by the metal ring 110. The bus bar terminal 106c includes two terminal ends 107c, one of which is located at the radially inner edge of the stator core 102 (closer to the rotor accommodation space 150), and the other is located at the radially outer edge of the stator core 102 (farther away from the rotor accommodation space 150), so as to be paired with the corresponding wire terminals 104 and fixed by the metal ring 110. The bus bar terminal 106d includes three terminal ends 107d that are all located at the radially inner edge of the stator core 102 (closer to the rotor accommodation space 150), so as to be paired with the corresponding wire terminals 104 and fixed by the metal ring 110. Two of the three ends 107d are located side by side, and one of the two side-by-side ends 107d is radially aligned with the terminal end 107a located at the radially outer edge of the stator core 102. The bus bar terminal 106e includes three terminal ends 107e located at the radially outer edge of the stator core 102 (farther away from the rotor accommodation space 150), so as to be paired with the corresponding wire terminals 104 and fixed by the metal ring 110, two of which are located side by side, and one of the two side-by-side ends 107e is radially aligned with the terminal end 107c located at the radially inner edge of the stator core 102. In some embodiments, the terminal ends (107a, 107b, 107c, 107d) located on the inner edge of the bus bar terminal are all paired with the wire terminal 104 on the inner side in the radial direction and fixed by the metal rings 110. In some embodiments, the terminal ends (107a, 107b, 107c, 107e) located on the outer edge of the bus bar terminal are all paired with the wire terminal 104 on the radially outer side thereof and fixed by the metal rings 110. In some embodiments, the wire terminal 104 may be an electrical phase terminal or an electrical neutral terminal. In some embodiments, the bus bar terminal 106a, the bus bar terminal 106b, and the bus bar terminal 106c do not overlap each other, bus bar terminal 106d overlaps the bus bar terminal 106a and the bus bar terminal 106b in the axial direction, and the bus bar terminal 106e overlapping the bus bar terminal 106b and the bus bar terminal 106c in the axial direction, thereby reducing the volume occupied by the whole bus bar terminals.

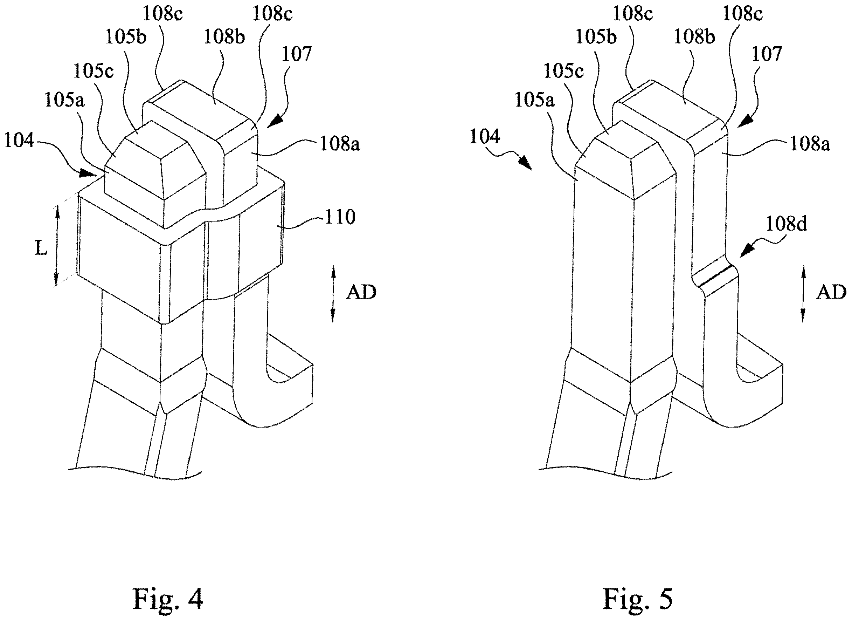

Reference is made to Fig. 4, which illustrates a fixing structure of a wire terminal and a bus bar terminal in a stator structure according to one embodiment of the present disclosure. The fixed structure includes an end of a wire terminal 104 paired with an end 107 of a bus bar terminal. The end of each wire terminal 104 is a quadrangular cylinder and includes multiple sidewalls 105a, an end surface 105b and slopes 105c. In this embodiment, the end surface 105b is connected to the four sidewalls 105a by the four slopes 105c. The end 107 of each bus bar terminal is a quadrangular cylinder and includes multiple sidewalls 108a, an end surface 108b and at least one rounded corner 108c. The end surface 108b of this embodiment is connected to two of the sidewalls 108a by two rounded corners 108c, and directly connected the other two sidewalls 108a. In this embodiment, the metal ring 110 is arranged around three of the sidewalls 105a of the end of the wire terminal 104 and three of the sidewalls 108a of the end 107 of the bus bar terminal 106 to fasten the wire terminal 104 and the bus bar terminal 106, thereby increasing the ability to resist shock damage. In some embodiments, the metal ring 110 has a length L in the axial direction AD of the two ends, and the length L is greater than 2 millimeters, so as to generate sufficient mechanical strength. In some embodiments, the metal ring 110 conformally contacts the sidewalls 105a of the end of the wire terminal 104 and the sidewalls 108a of the end 107 of the bus bar terminal 106. In some embodiments, the metal ring 110 can be processed by a clamping tool so that its inner wall conformally contacts the sidewalls 105a of the end of the wire terminal 104 and the sidewalls 108a of the end 107 of the bus bar terminal 106. In some embodiments, the metal ring 110 can be pre-shaped into a desired structure, and then sleeved to the sidewalls 105a of the end of the wire terminal 104 and the sidewalls 108a of the end 107 of the bus bar terminal 106, and the four slopes 105c of the wire terminal 104 and the two rounded corners 108c of the end 107 of the bus bar terminal both help to make the metal ring 110 slide to the desired position easily. In some embodiments, the metal ring 110 is a metal ring made of iron, aluminum, copper, tin, steel or alloys thereof. In some embodiments, the metal ring 110 is made of the same material as the wire terminal 104 and the bus bar terminal 106.

Reference is made to Fig. 5, which illustrates the fixing structure in Fig. 4 with its metal ring removed. This figure shows that the end of a wire terminal 104 is paired with the end 107 of a bus bar terminal 106, and the metal ring 110 is not put on the state. The end of the wire terminal 104 includes multiple sidewalls 105a, an end surface 105b and multiple slopes 105c, and in an embodiment that the end surface 105b is connected to the four sidewalls 105a by the four slopes 105c. The end 107 of the bus bar terminal 106 includes multiple sidewalls 108a, an end surface 108b and multiple rounded corners 108c. The end surface 108b of an embodiment is connected to two of the sidewalls 108a through the two rounded corners 108c, and directly connected to the other two sidewalls 108a. In some embodiments, part of the sidewall 108a further includes a stepped structure 108d to restrict the sliding position of the metal ring 110. In some embodiments, the stepped structure 108d may be located on one or both of the sidewalls 108a.

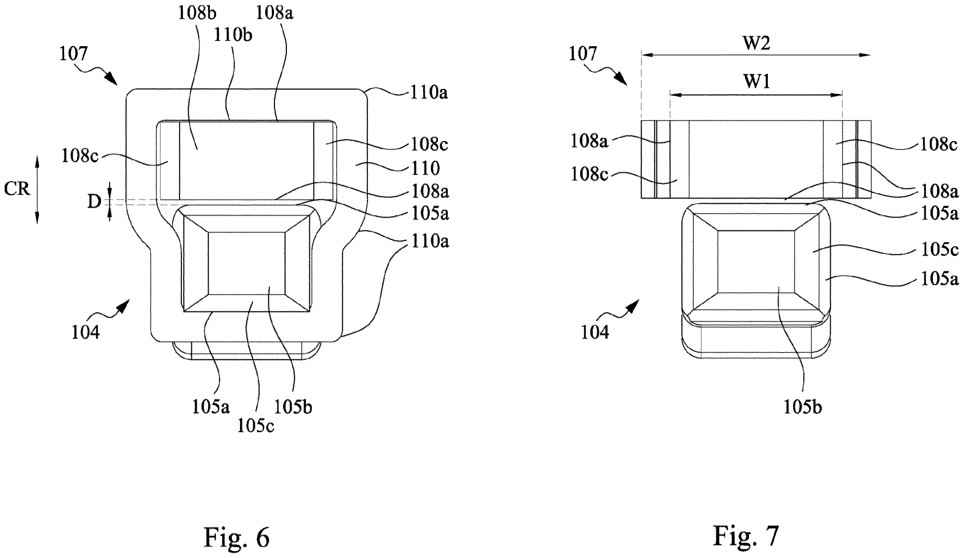

Reference is made to Fig. 6, which illustrates a top view of the fixing structure in Fig. 4. The fixing structure includes an end of a wire terminal 104 paired with an end 107 of a bus bar terminal 106 , and a metal ring 110 is added surrounding the sidewalls 105a of the end of the wire terminal 104 and the sidewalls 108a of the end 107 of the bus bar terminal 106. In some embodiments, a sidewall 105a at the end of the wire terminal 104 and a sidewall 108a at the end 107 of the corresponding bus bar terminal 106 face each other or are immediately-adjacent to each other, and the inner sidewall 110b of the metal ring 110 surrounds and contacts the remaining three non-adjacent sidewalls 105a of the wire terminal 104, and surrounds and contacts the remaining three non-adjacent sidewalls 108a of the end 107 of the bus bar terminal 106, so that the end of the wire terminal 104 and the end 107 of the bus bar terminal 106 has a pair of sidewalls (105a, 108a) that face each other and has a distance D therebetween less than 0.5 mm. The metal ring 110 is used to make the end of the wire terminal 104 and the end 107 of the bus bar terminal 106 to have a restrict force in the direction CR (even if the distance D is less than 0.5 mm), so as to increase the ability of resisting vibration damage. The direction CR is perpendicular to a pair of sidewalls (105a, 108a) where the end of the wire terminal 104 is immediately-adjacent to the end 107 of the bus bar terminal 106. In some embodiments, the metal ring 110 is a continuous closed-loop metal ring structure without discontinuous gaps. In some embodiments, the metal ring 110 is made of a pipe, and is a polygon with rounded corners 110a in cross-section. This configuration can reduce processing complexity and improve yield. In some embodiments, the cross-sectional area of the end 107 of the bus bar terminal 106 is greater than the cross-sectional area of the end of the wire terminal 104 where the end 107 of the bus bar terminal 106 is immediately-adjacent to the end of the wire terminal 104, so that the bus bar terminal 106 has a cross-sectional area that can meet higher current density requirements.

Reference is made to Fig. 7, which illustrates a top view of the fixing structure in Fig. 5. For ease of illustration, this figure shows a state where the end of a wire terminal 104 is paired with the end 107 of a bus bar terminal 106 and the metal ring 110 is not put on. The end of the wire terminal 104 includes multiple sidewalls 105a, an end surface 105b and multiple slopes 105c, and in an embodiment that the end surface 105b is connected to the four sidewalls 105a by the four slopes 105c. The end 107 of the bus bar terminal 106 includes multiple sidewalls 108a, an end surface 108b and a plurality of rounded corners 108c. The end surface 108b of an embodiment is connected to two of the sidewalls 108a through the two rounded corners 108c, and directly connected to the other two sidewalls 108a. In some embodiments (referring to FIG. 5), part of the sidewalls 108a further include a stepped structure 108d to restrict the sliding position of the metal ring 110. It can be seen from the top view that the stepped structure 108d is a structure formed by a pair of sidewalls 108a at the end 107 of the bus bar terminal 106, and the width between the pair of sidewalls 108a increases from the width W1 between the paired rounded corners 108c to the width W2 between the outer edges of the stepped structure 108d so as to restrict the sliding position of the metal ring 110.

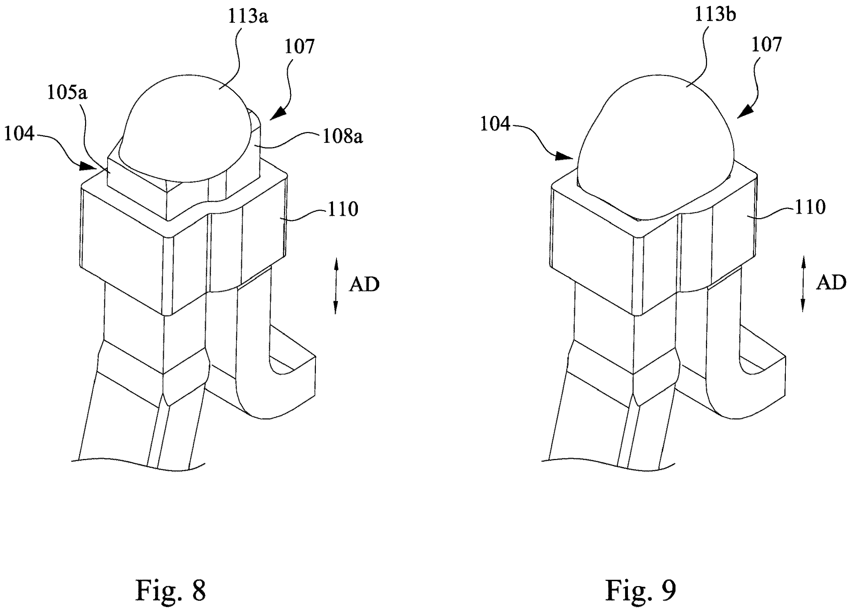

Reference is made to Fig. 8, which illustrates a fixing structure according to one embodiment of the present disclosure. The fixing structure includes the end of a wire terminal 104 paired with the end 107 of a bus bar terminal 106, and a metal ring 110 and a solder joint structure 113a are added. The solder joint structure 113a is used to connect an end surface of the end of the wire terminal 104 and an end surface of the end of the bus bar terminal 106 such that the two end surfaces are electrically connected. The metal ring 110 is used to share the mechanical stress caused by vibration, so that the quality of the solder joint structure 113a (penetration depth, porosity, and pore size) can be properly adjusted down, thereby reducing manufacturing difficulty and improving production yield. In some embodiments, the width of the solder joint structure 113a can restrict the metal ring 110 from falling off, and the aforementioned stepped structure 108d can restrict the position where the metal ring 110 slides (refer to Figures 5 and 7), and the metal ring 110 is restricted between the solder joint structure 113a and the stepped structure 108d. In some embodiments, the solder joint structure 113a is not in contact with the metal ring 110.

Fig. 9 illustrates a fixing structure according to another embodiment of the present disclosure. The fixing structure includes the end of a wire terminal 104 paired with the end 107 of a bus bar terminal 106, plus a metal ring 110 and a solder joint structure 113b. Compared with the solder joint structure 113a in Fig. 8, the solder joint structure 113b of this embodiment covers a larger area and is in contact with the metal ring 110 to secure the metal ring 110. The metal ring 110 is used to share the mechanical stress caused by vibration, so that the quality of the solder joint structure 113b (penetration depth, porosity, and pore size) can be properly adjusted down, thereby reducing manufacturing difficulty and improving production yield. In some embodiments, the width of the solder joint structure 113a can restrict the metal ring 110 from falling off, and the aforementioned stepped structure 108d can restrict the position where the metal ring 110 slides (refer to Figures 5 and 7), and the metal ring 110 is restricted between the solder joint structure 113a and the stepped structure 108d. The metal ring 110 is confined between the solder joint structure 113b and the stepped structure 108d.

The stator structure and its terminal fixing structure disclosed herein are surrounded by metal rings on two immediate-adjacent sidewalls to the terminal ends to share the mechanical stress caused by vibration, so that the quality of the solder joint structure can be properly adjusted down, thereby reducing manufacturing difficulty and improving production yield.

## Claims

1. A terminal fixing structure applied in a stator (100) and **characterized by** comprising:
a wire terminal (104) comprising a first end, and the first end being a quadrilateral cylinder;
a bus bar terminal (106a-106e) comprising a second end (107), and the second end being a quadrangular cylinder, wherein a sidewall (105a) of the first end and a sidewall (108a) of the second end are immediately-adjacent to each other;
a metal ring (110) disposed around the first end and the second end; and
a solder joint structure (113 a, 113b) connecting an end surface of the first end and an end surface of the second end.

2. The terminal fixing structure of claim 1, wherein the solder joint structure (113b) is in physical contact with the metal ring (110).

3. The terminal fixing structure of claim 1, wherein the metal ring (110) has a length (L) in an extension direction of the first end and the second end, and the length (L) is greater than 2 millimeters.

4. The terminal fixing structure of claim 1, wherein a distance (D), between the sidewall (105a) of the first end and the sidewall (108a) of the second end that are immediately-adjacent to each other, is smaller than 0.5 millimeter.

5. The terminal fixing structure of claim 1, wherein the metal ring (110) conformally contacts remaining sidewalls (105a, 108a) except the immediately-adjacent sidewalls of the first end and the second end.

6. The terminal fixing structure of claim 1, wherein the metal ring (110) is a polygon with rounded corners.

7. The terminal fixing structure of claim 1, wherein a sidewall (108a) of the bus bar terminal (106a-106e) has at least one stepped structure (108d) to restrict the metal ring (110).

8. The terminal fixing structure of claim 1, wherein a cross-sectional area of the bus bar terminal (106a-106e) is larger than a cross-sectional area of the wire terminal (104) where the sidewall (105a) of the first end and the sidewall (108a) of the second end that are immediately-adjacent to each other.

9. A stator (100) **characterized by** comprising:
a stator core (102) comprising multiple slot-positions (102a);
a plurality of wire terminals (104) each comprising a wire terminal end, the wire terminal end being partially located in a corresponding one of the multiple slot-positions (102a), the wire terminal end comprising a first end and the first end being a quadrilateral cylinder;
a plurality of bus bar terminals (106a-106e) disposed in the stator core (102), each of the plurality of bus bar terminals (106a-106e) comprising a bus bar terminal end (107), the bus bar terminal end (107) comprising a second end and the second end being a quadrilateral cylinder, wherein a sidewall (105a) of the first end and a sidewall (108a) of the second end are immediately-adjacent to each other;
a plurality of metal rings (110) each disposed around a corresponding first end and a corresponding second end; and
a plurality of solder joint structures (113 a, 113b) each connecting an end surface of the corresponding first end and an end surface of the corresponding second end.

10. The stator of claim 9, wherein the wire terminals (104) comprise an electrical phase terminal or an electrical neutral terminal.

11. The stator of claim 9, wherein each of the solder joint structures (113b) is in physical contact with a corresponding one of the metal rings (110).

12. The stator of claim 9, wherein a distance (D), between the sidewall (105a) of the first end and the sidewall (108a) of the second end that are immediately-adjacent to each other, is smaller than 0.5 millimeter.

13. The stator of claim 9, wherein each metal ring (110) is a polygon with rounded corners (110a).

14. The stator of claim 9, wherein a sidewall (108a) of each bus bar terminal (106a-106e) has at least one stepped structure (108d) to restrict a corresponding one of the metal rings (110).

15. The stator of claim 9, wherein each metal ring (110) conformally contacts remaining sidewalls (105a, 108a) except the immediate-adjacent sidewalls of the corresponding first end and the corresponding second end.
